# DEMANDE DE BREVET EUROPEEN

(11) **EP 4 282 237 A1**
(43) Date de publication de la demande: **29.11.2023**
(21) Numéro de dépôt: 23174911.0
(22) Date de dépôt: 23.05.2023
(51) Int. Cl.: A01B 3/46, A01B 59/043

(54) **DISPOSITIF DE LIAISON PERFECTIONNE POUR RELIER UN INSTRUMENT AGRICOLE A UN ATTELAGE TROIS POINTS**

(30) Priorité: 24.05.2022 FR 2204971
(71) Demandeur: Kuhn-Huard S.A.S, 44110 Chateaubriant (FR)
(72) Inventeur: DUCROQUET, Frédéric, 44110 VILLEPOT (FR)
(74) Mandataire: Esch, Esther Evelyne

(57) **Abrégé**

La présente invention a pour objet un dispositif de liaison pour relier un instrument agricole, plus particulièrement une charrue, à un attelage trois points, plus particulièrement monté à l'arrière ou à l'avant d'un véhicule tracteur, le dispositif de liaison comprenant une tête d'attelage (1) comprenant une potence (1a) verticale percée d'une ou plusieurs séries de trous (10a) disposées les unes au-dessus des autres en définissant chacune une position d'attelage à une hauteur prédéterminée, la ou au moins l'une des série(s) de trous (10a) comportant des trous (10a) oblongs définissant une position d'attelage flottante et un axe de connexion (1b).

Un tel dispositif comprend en outre un système de blocage (2) configuré pour pouvoir réaliser une fonction de blocage principale et pour pouvoir être monté, de manière amovible, sur l'axe de connexion (1b) positionné dans les trous (10a) oblongs de sorte à réaliser, dans une configuration de montage principale, la fonction de blocage principale en bloquant le déplacement transversal de l'axe de connexion (1b) dans la direction des trous (10a) oblongs.

## Description

La présente invention concerne le domaine des instruments agricoles et leur liaison aux systèmes d'attelage des véhicules tracteurs et a pour objet un dispositif de liaison pour relier un instrument agricole, plus particulièrement une charrue, à un attelage trois points, plus particulièrement monté à l'avant ou à l'arrière d'un véhicule tracteur.

Les attelages trois points sur les tracteurs sont bien connus et permettent de relier un instrument agricole, tel qu'une charrue par exemple, à l'avant ou à l'arrière du tracteur.

Un attelage trois points comprend deux bras inférieurs situés sensiblement dans le même plan horizontal et un bras supérieur, également connu sous le nom de bielle supérieure d'attelage, disposé au centre au-dessus des bras inférieurs. Ces bras sont reliés individuellement, par l'une de leurs extrémités formant un point d'appui, à un tracteur, à l'arrière ou à l'avant de ce dernier et, par leur autre extrémité (libre) formant un point d'attelage, à l'instrument. Les extrémités libres des trois bras définissent alors les trois points de l'attelage, deux points inférieurs et un point supérieur, qui peuvent être accouplés/reliés à l'instrument pour le relier au tracteur. Ces bras sont reliés au tracteur ou à l'instrument au moyen d'un montage en chape constitué d'une pièce présentant une forme en U destinée à recevoir un axe de connexion pour réaliser une liaison pivot. Les deux flancs de la pièce en U sont symétriques et pourvus d'un ou plusieurs trous destiné(s) à recevoir l'axe de connexion.

Une charrue comporte un bâti longitudinal sur lequel sont fixés les socs de la charrue et une tête d'attelage dans laquelle est montée, à rotation dans le cas d'une charrue réversible, l'une des extrémités du bâti. La tête d'attelage est équipée de moyens pour pouvoir être attelée à l'attelage trois points du tracteur.

Plus particulièrement, la tête d'attelage comprend une potence percée de plusieurs séries de trous, généralement deux trous, disposées les unes au-dessus des autres en définissant chacune une position d'attelage à une hauteur prédéterminée. Certaines potences comportent une seule série de trous définissant une seule position d'attelage. La potence est l'élément qui comporte l'emplacement du point d'attelage supérieur du bras supérieur sur l'instrument. La tête d'attelage comprend en outre un axe de connexion, également connu sous le nom de broche, apte à être positionné dans la ou l'une des position(s) d'attelage, en traversant les trous, pour permettre la connexion du point supérieur d'attelage sur l'axe de connexion entre les trous. Ces différentes séries de trous superposées et ménagés dans la potence de l'instrument à des hauteurs différentes permettent le réglage du point de convergence. Le point de convergence est en fait un point fictif permettant d'optimiser le report de charge de l'instrument sur l'essieu arrière du tracteur. Ce point de convergence est défini par l'intersection de deux lignes fictives symbolisées par le prolongement vers l'avant des bras inférieurs et du bras supérieur. Il est possible de faire varier la position de ce point en déplaçant les positions d'attelage du bras supérieur coté tracteur et/ou coté instrument. En effet, la variation du point de convergence permet d'améliorer la traction, la stabilité et l'adhérence du tracteur.

Plus particulièrement, pour un tracteur deux roues motrices, le point de convergence doit se situer à proximité du centre du tracteur pour permettre un report de charge assez important du poids du pont avant (jusqu'à 80%) sur l'essieu arrière. On parle d'un point de convergence court. Avec un tracteur quatre roues motrices, on privilégie un point de convergence long pour que les roues de l'essieu avant du tracteur gardent un certain appui au sol et donc avoir un report de charge sur l'essieu arrière plus modéré. Le point de convergence se situe au niveau du pont avant du tracteur. Ce réglage est important pour optimiser l'effort de traction du tracteur. On comprend donc que le changement de position du bras supérieur (hauteur du point d'appui et hauteur du point d'attelage) modifie les appuis au sol du tracteur et donc sa capacité de traction. Le bras supérieur est généralement de longueur réglable, ainsi une modification de sa longueur a également une incidence sur le point de convergence de l'attelage. L'allongement ou le raccourcissement du bras supérieur permet notamment le réglage du talonnage c'est-à-dire la position de l'instrument au travail par rapport au sol, dans l'axe longitudinal.

Les trous sont soit oblongs afin de définir une position d'attelage flottante soit ronds afin de définir une position d'attelage fixe. L'axe de connexion s'étend sensiblement perpendiculairement au sens d'avance du tracteur.

Dans une position d'attelage flottante, l'axe de connexion traverse les trous oblongs avec un jeu longitudinal permettant un déplacement transversal de l'axe de connexion dans la direction du trou oblong. Cette position permet notamment à la charrue de travailler sur des terrains vallonnés ou dont le sol n'est pas totalement ou sensiblement plat.

Dans une position d'attelage fixe, l'axe de connexion traverse les trous ronds sans permettre un déplacement transversal de l'axe de connexion (pas de jeu longitudinal). Cette position permet notamment une meilleure stabilité de la charrue et un report de charge, notamment vers le pont avant du tracteur, amélioré, plus particulièrement en conditions difficiles. La position d'attelage fixe permet à la charrue d'effectuer un travail plus précis, c'est-à-dire que les corps avant et arrière de la charrue travaillent sensiblement à la même profondeur.

Lorsque la charrue est équipée d'une roue de jauge montée à l'extrémité arrière de la charrue, il est nécessaire de permettre à la charrue de prendre de l'angle par rapport au tracteur lors du travail. Dans ce cas, l'axe de connexion est positionné dans une position d'attelage flottante en étant inséré dans des trous oblongs. Dans cette configuration, la charrue est semi portée. Au contraire, lorsque la roue de jauge est proche du centre de la charrue, il n'est pas nécessaire de lui faire prendre un tel angle, et, dans ce cas, l'axe de connexion est positionné dans une position d'attelage fixe en étant inséré dans des trous ronds.

Ainsi, dans le cas où la potence de la tête d'attelage comprend une alternance de trous ronds et de trous oblongs, l'utilisateur peut régler la position d'attelage pour obtenir une position d'attelage fixe ou flottante selon les effets/avantages qu'il souhaite obtenir durant le travail ou le transport de la charrue.

L'utilisateur a donc la possibilité d'effectuer plusieurs réglages, soit le type de position d'attelage lorsque la tête d'attelage comprend au moins une position d'attelage fixe et au moins une position d'attelage flottante et de régler le point de convergence en modifiant la hauteur de l'axe de connexion dans la tête d'attelage et donc la hauteur du point d'attelage supérieur.

Toutefois, si une optimisation du réglage du point de convergence est possible, celle-ci est dépendante du type de position d'attelage, c'est-à-dire d'une position d'attelage fixe ou flottante, puisqu'à chaque position d'attelage (ou à chaque hauteur d'attelage) correspond une position d'attelage fixe ou flottante.

Dans le cas d'une tête d'attelage comportant uniquement des trous oblongs, l'optimisation du réglage est donc dépendante des positions d'attelage flottantes. Dans le cas d'une tête d'attelage comportant uniquement des trous ronds, l'optimisation du réglage est donc dépendante des positions d'attelage fixes. Dans le cas d'une tête d'attelage comportant une alternance de trous ronds et de trous oblongs, afin de permettre à la barre supérieure d'attelage d'être reliée à la tête d'attelage de la charrue dans une position d'attelage fixe ou flottante, l'optimisation du réglage est donc dépendante d'au moins une position d'attelage fixe ou d'au moins une position d'attelage flottante.

La présente invention a pour but de pallier ces inconvénients en proposant un dispositif de liaison pour relier un instrument agricole, plus particulièrement une charrue, à un attelage trois points monté à l'avant ou à l'arrière d'un véhicule tracteur, permettant de choisir le type d'attelage fixe ou flottant pour s'adapter aux conditions de travail tout en ayant une force de traction du véhicule tracteur.

A cet effet, le dispositif de liaison pour relier un instrument agricole à un attelage trois points d'un véhicule tracteur, l'attelage comportant un bras supérieur, le dispositif de liaison comprenant une tête d'attelage comprenant, d'une part, une potence percée d'une ou plusieurs série(s) de trous disposées les unes au-dessus des autres, la ou chaque série de trous définissant une position d'attelage à une hauteur prédéterminée, la ou au moins l'une des série(s) comportant des trous oblongs définissant une position d'attelage flottante, le cas échéant l'autre ou au moins l'une des autres série(s) comportant des trous oblongs ou ronds, la ou chaque série de trous ronds définissant une position d'attelage fixe et, d'autre part, un axe de connexion apte à être positionné dans l'une des positions d'attelage, en traversant les trous oblongs ou ronds définissant cette dernière, pour permettre la connexion du bras supérieur avec la potence et réaliser un point d'attelage supérieur, l'axe de connexion traversant les trous oblongs avec un jeu longitudinal permettant un déplacement transversal de l'axe de connexion dans la direction desdits trous oblongs, caractérisé en ce qu'il comprend en outre un système de blocage configuré pour pouvoir réaliser une fonction de blocage principale et pour pouvoir être monté, de manière amovible, sur l'axe de connexion positionné dans les trous oblongs de sorte à réaliser, dans une configuration de montage principale, la fonction de blocage principale en bloquant le déplacement transversal de l'axe de connexion dans la direction des trous oblongs, de préférence tout en bloquant la rotation de l'axe de connexion autour de son axe.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

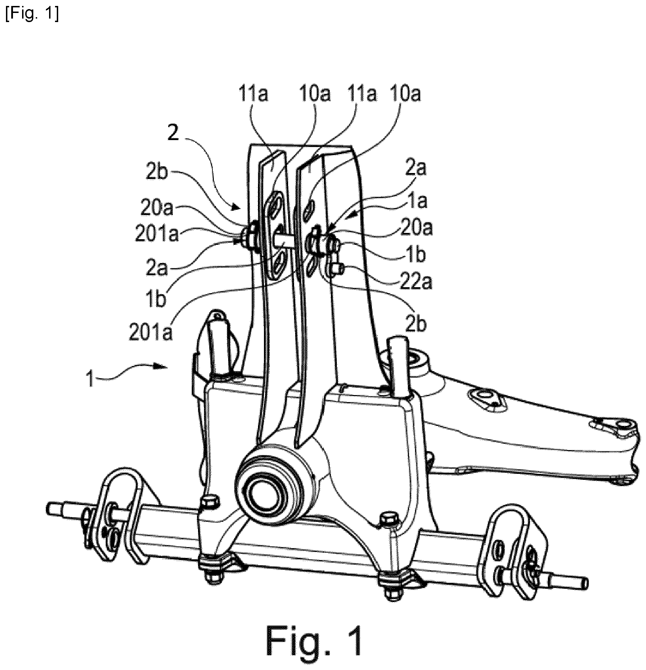

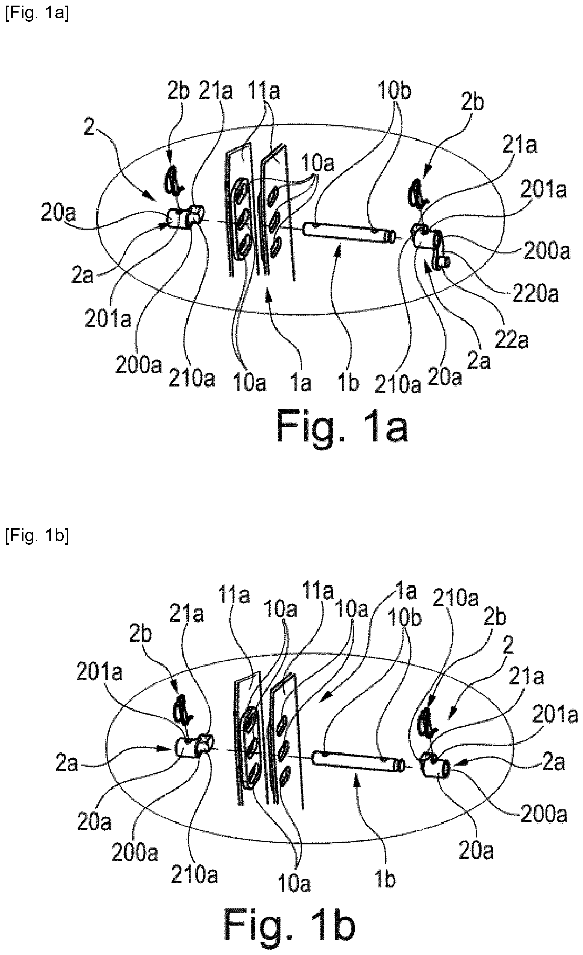

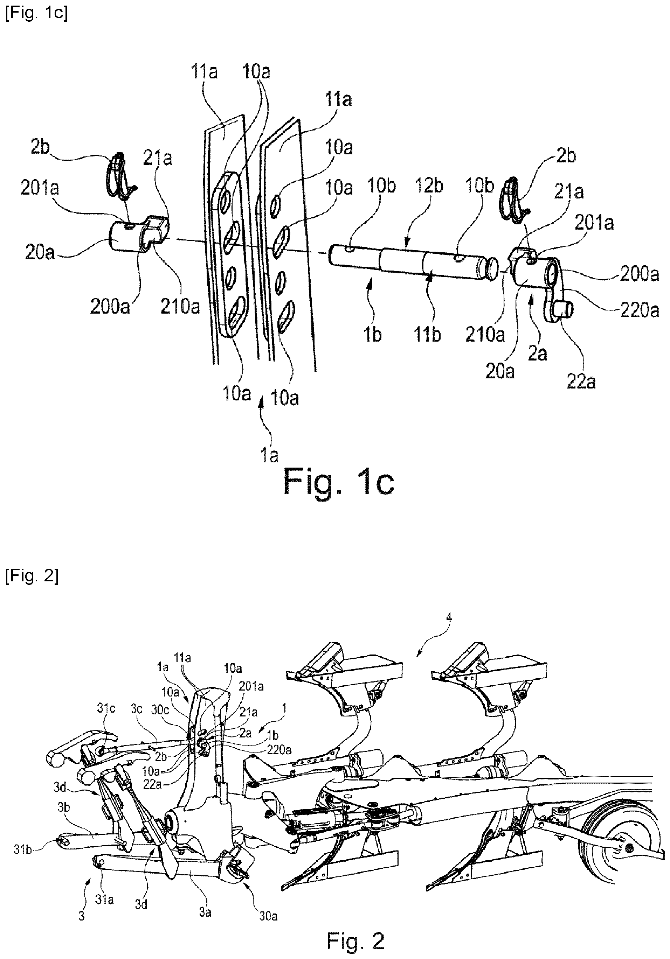

[Fig. 1] représente une vue en perspective du dispositif de liaison selon la présente invention, avec le système de blocage configuré pour pouvoir réaliser la fonction de blocage principale et l'autre fonction de blocage et monté, dans la configuration de montage principale, sur l'axe de connexion pour réaliser la fonction de blocage principale, lequel axe de connexion étant positionné dans des trous oblongs,
[Fig. 1a] est une vue éclatée d'une partie de la figure 1 montrant l'axe de connexion destiné à être inséré dans les trous oblongs et le système de blocage, notamment les deux éléments de blocage pourvus chacun d'un organe de blocage principal et d'un organe de blocage additionnel,
[Fig. 1b] représente une vue éclatée similaire à celle de la figure 1a mais dans un autre mode de réalisation du système de blocage dans lequel celui-ci est configuré pour pouvoir réaliser seulement la fonction de blocage principale et montrant plus particulièrement à cet effet les deux éléments de blocage pourvus chacun seulement d'un organe de blocage principal,
[Fig. 1c] est une vue similaire à celle de la figure 1a dans une forme de réalisation de l'axe de connexion dont les extrémités présentent chacune un diamètre différent, chaque élément de blocage étant adapté à l'une des extrémités de l'axe de connexion sur laquelle il est monté, et montrant une potence avec une alternance de séries de trous oblongs et ronds,
[Fig. 2] montre un attelage trois points sur lequel est fixé le dispositif de liaison représenté sur la figure 1 en lien avec une charrue représentée partiellement,

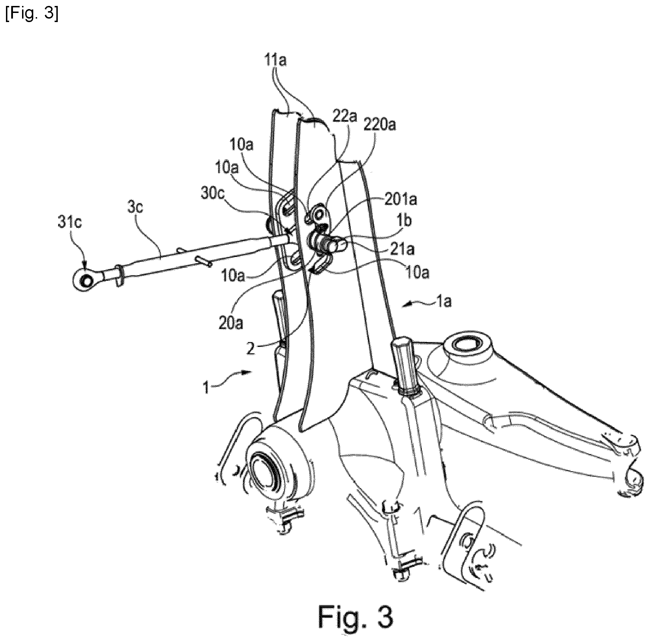

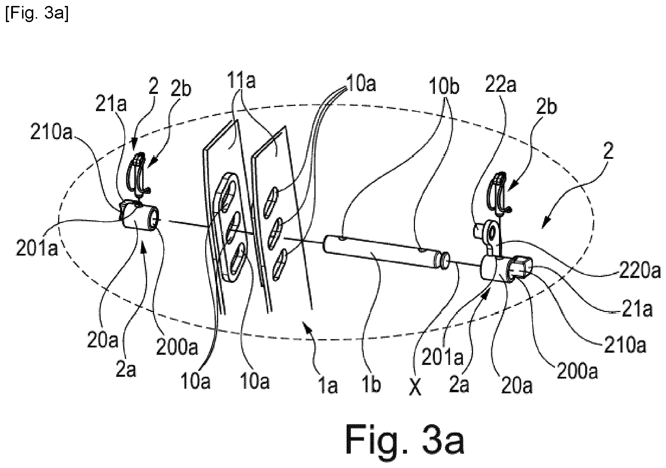

[Fig. 3] montre le dispositif de liaison représenté sur la figure 1 dans une autre configuration de montage du système de blocage autorisant une position d'attelage flottante du bras supérieur et dans laquelle ledit système de blocage est monté sur l'axe de connexion pour réaliser une autre fonction de blocage,
[Fig. 3a] est une vue éclatée d'une partie de la figure 3 montrant l'axe de connexion destiné à être inséré dans les trous oblongs de l'une des séries de trous oblongs et dont un seul des éléments de blocage est pourvu d'un organe de blocage additionnel permettant de réaliser l'autre fonction de blocage.

Les figures annexées montrent un dispositif de liaison pour relier un instrument agricole 4, plus particulièrement une charrue, à un attelage 3 trois points. L'instrument agricole 4 est monté à l'avant ou à l'arrière d'un véhicule tracteur (non représenté). L'attelage 3 trois points comporte un bras supérieur 3c. La figure 2 représente une charrue attelée à l'arrière d'un véhicule tracteur (non représenté) via un attelage 3 trois points. Le dispositif de liaison selon l'invention peut également être utilisé en lien avec tout type d'instrument agricole destiné à être monté sur l'attelage trois points. L'instrument agricole 4 peut être une machine de travail du sol, plus particulièrement une charrue, ou une machine de fenaison, par exemple un andaineur ou un faneur.

Un tel attelage 3 trois points comporte en outre, de manière connue, deux bras inférieurs 3a, 3b munis chacun d'une extrémité libre de liaison formant un point d'attelage inférieur 30a, 30b. Les points d'attelage inférieurs et supérieur 30a, 30b, 30c permettent la liaison articulée entre l'attelage 3 trois points et l'instrument agricole 4. Les autres extrémités opposées 31a, 31b, 31c des bras 3a, 3b 3c inférieurs et supérieur forment chacune un point d'appui respectivement inférieur ou supérieur permettant la liaison articulée entre l'attelage 3 trois points et le véhicule tracteur. Les autres parties ou éléments de l'attelage 3 trois points, telles que les bielles de relevage 3d par exemple qui servent à transmettre l'effort aux bras inférieurs 3a, 3b pour les lever ou les abaisser, étant bien connus pour ce type d'attelage et ne sont pas décrits plus en détail dans la présente demande. De même, le dispositif (généralement un montage en chape) permettant de relier les bras 3a, 3b, 3c au véhicule tracteur n'est pas illustré et décrit plus en détail dans la présente demande.

Le dispositif de liaison, selon la présente invention, comprend une tête d'attelage 1 comprenant :
- une potence 1a percée d'une ou plusieurs série(s) de trous 10a disposées les unes au-dessus des autres, la ou chaque série de trous 10a définissant une position d'attelage à une hauteur prédéterminée, la ou au moins l'une des série(s) comportant des trous 10a oblongs définissant une position d'attelage flottante. Le cas échéant (cas d'une pluralité de séries), l'autre ou au moins l'une des autres série(s) comporte des trous 10a oblongs ou ronds, la ou chaque série de trous 10a ronds définissant une position d'attelage fixe et,
- un axe de connexion 1b apte à être positionné dans l'une des positions d'attelage, en traversant les trous 10a oblongs ou ronds définissant cette dernière, pour permettre la connexion du bras supérieur 3c avec la potence 1a et réaliser un point d'attelage supérieur 30c.

L'axe de connexion 1b traverse les trous 10a oblongs avec un jeu longitudinal permettant un déplacement transversal de l'axe de connexion 1b dans la direction des trous 10a oblongs. Ainsi, le point d'attelage supérieur 30c est susceptible de se déplacer dans les trous 10a oblongs de la potence 1a.

En outre, de manière connue, l'axe de connexion 1b dispose d'au moins en partie une forme cylindrique. Toujours de manière connue, l'axe de connexion 1b est une pièce cylindrique et est pourvu d'au moins un alésage 10b situé dans le voisinage d'au moins une de ses extrémités. Dans le cas représenté sur les figures, l'axe de connexion 1b est pourvu à chacune de ses extrémités d'un alésage 10b. Chaque alésage 10b est débouchant et est destiné à recevoir un moyen d'arrêt (ou de fixation) 2b amovible, tel qu'une goupille élastique par exemple, permettant de bloquer l'axe de connexion 1b en translation axial (ou longitudinal) et de sécuriser ainsi la liaison du bras supérieur 3c sur la potence 1a en cours d'utilisation de l'instrument agricole 4, plus particulièrement le point d'attelage supérieur 30c. On entend par bloquer l'axe de connexion 1b en déplacement axial le fait de bloquer son déplacement dans la direction de son axe ou de limiter son déplacement axial pour l'empêcher de sortir de la potence 1a. L'axe de connexion 1b est connu sous le nom de broche. L'axe de connexion 1b dispose d'une longueur suffisante pour que chacune de ses extrémités dépassent de part et d'autre des trous 10a ménagées dans la potence 1a. D'une manière particulière, la longueur de l'axe de connexion 1b est telle qu'à l'état monté, ses deux alésages 10b soient positionnés à l'extérieur des flancs 11a verticaux que comprend la potence 1a (figures 1, 2 et 3). On dit que l'axe de connexion 1b est traversant. Les flancs 11a, qui sont en regard l'un l'autre (orientés parallèlement l'un par rapport à l'autre) réalisent un montage en chape pour le point d'attelage supérieur 30c. Les flancs 11a sont pourvus chacun d'un ou plusieurs trous 10a disposés l'un au-dessus de l'autre et destiné(s) à recevoir l'axe de connexion 1b. Les flancs 11a sont symétriques. Chaque trou 10a d'un flanc 11a se trouve donc en vis-à-vis d'un trou 10a de l'autre flanc 11a, les trous 10a en vis-à-vis formant la ou l'une des séries de trous 10a et définissant la ou l'une des positions d'attelage. Les trous 10a de chaque flanc sont ainsi superposés les uns au-dessus des autres de manière à définir les différentes positions d'attelage.

Dans l'exemple de réalisation représenté sur les figures 1, 1a, 1b, 2, 3, 3a, la potence 1a est pourvue de trois séries de deux trous 10a (ou trois paires de trous 10a) oblongs définissant chacune une position d'attelage flottante. Dans l'exemple de réalisation représenté sur la figure 1c, la potence 1a est pourvue de quatre séries de deux trous 10a ronds ou oblongs (ou quatre paires de trous 10a), à savoir deux séries de deux trous 10a oblongs définissant chacune une position d'attelage flottante et deux séries de deux trous 10a ronds définissant chacune une position d'attelage fixe. La figure 1c montre ainsi, plus particulièrement, un exemple d'une alternance de trous 10a ronds et oblongs, c'est à dire de séries de trous 10a ronds et de séries de trous 10a oblongs. Les trous 10a de la ou chaque série sont alignés en hauteur et espacés les uns des autres. On choisit l'une des séries de trous 10a (hauteur d'attelage) pour y insérer l'axe de connexion 1b en fonction du report de charge souhaité de l'instrument agricole 4 sur le véhicule tracteur. Il s'agit de positionner au mieux le point de convergence pour améliorer la traction et l'adhérence du véhicule tracteur qui est attelée à l'instrument agricole 4.

Lorsque l'axe de connexion 1b, essentiellement de forme cylindrique dans sa forme illustrée sur les figures annexées, est inséré dans les trous 10a oblongs de la potence 1a, l'axe de connexion 1b peut se déplacer transversalement dans la direction des trous 10a oblongs et donc réaliser un attelage flottant entre le véhicule tracteur et l'instrument agricole 4. Dans cette position d'attelage flottante, l'axe de connexion 1b dispose donc d'un jeu longitudinal permettant un déplacement transversal de l'axe de connexion 1b dans les trous 10a oblongs. Plus précisément, le point d'attelage supérieur 30c est flottant, il est susceptible de se déplacer, puisque l'axe de connexion 1b traverse les trous 10a oblongs. Par ailleurs lorsque l'axe de connexion 1b, essentiellement de forme cylindrique, est inséré dans les trous 10a ronds de la potence (1a), sa position est fixe dans la potence 1a, sans déplacement possible. L'attelage entre le véhicule tracteur et l'instrument agricole 4 est donc fixe ou rigide, puisqu'il n'y a pas de jeu longitudinal de l'axe de connexion 1b. Plus précisément, le point d'attelage supérieur 30c est fixe, sans déplacement, lorsque l'axe de connexion 1b traverse les trous 10a ronds. Le diamètre des trous 10a ronds et oblongs et le diamètre de l'axe de connexion 1b sont tels que l'axe de connexion 1b puisse traverser les trous 10a. Dans la forme de réalisation de la potence 1a représentée sur les figures 1, 1a, 1b, 2, 3, 3a, la potence 1a est uniquement percée de trous 10a oblongs, c'est-à-dire qu'elle ne comporte pas de trous 10a ronds, tandis que, dans la forme de réalisation de la potence 1a représentée sur la figure 1c, la potence 1a est percée de trous 10a ronds et de trous 10a oblongs. D'une manière générale, l'utilisateur va sélectionner le type d'attelage fixe ou flottant lorsqu'il va relier la charrue au véhicule tracteur. Ce choix est effectué, en amont des opérations de labour, avant l'utilisation de l'instrument agricole 4 dans le champ. La charrue est généralement posée sur un sol stable et plat et l'utilisateur effectue une marche arrière avec le véhicule tracteur pour atteler la charrue dans le but d'accoupler les points d'attelage inférieurs 30a, 30b, extrémités des bras inférieurs 3a,3b aux points de connexion inférieurs de la charrue. Lorsque les points d'attelage 30a, 30b sont accouplés, l'utilisateur utilise le système de relevage du tracteur pour relier le bras supérieur 3c à la potence de la charrue. L'utilisateur sélectionne et positionne l'axe de connexion 1b dans la série de trous 10a correspondant à la hauteur d'attelage souhaitée. La hauteur d'attelage est sélectionnée par avoir un report de charge optimisé de la charrue sur le tracteur. Avant de monter les moyens d'arrêt 2b sur l'axe de connexion 1b, l'utilisateur installe encore le système de blocage 2 pour compléter le montage et assurer un travail dans la position d'attelage sélectionnée (fixe ou flottante). Les choix de hauteur et de type d'attelage se font en amont de l'utilisation de l'instrument agricole 4. Les différentes actions décrites ci-avant sont effectuées lors de l'accouplement de l'instrument agricole 4 au véhicule tracteur, plus particulièrement lors de la mise en place de l'axe de connexion 1b sur la potence 1a de l'instrument agricole 4 pour réaliser le point d'attelage supérieure 30c.

Conformément à la présente invention, le dispositif de liaison comprend en outre un système de blocage 2 configuré pour pouvoir réaliser une fonction de blocage principale et pour pouvoir être monté, de manière amovible, sur l'axe de connexion 1b positionné dans les trous 10a oblongs de sorte à réaliser (ou exercer), dans une configuration de montage principale, la fonction de blocage principale en bloquant (consistant à bloquer) le déplacement transversal de l'axe de connexion 1b dans la direction des trous 10a oblongs, de préférence tout en bloquant la rotation de l'axe de connexion 1b autour de son axe X. Le système de blocage 2 permet ainsi, lorsqu'il réalise la fonction de blocage principale, de supprimer le déplacement transversal de l'axe de connexion 1b dans la direction des trous 10a oblongs traversés par ce dernier et donc de supprimer le jeu longitudinal. Le système de blocage 2 est installé sur l'axe de connexion 1b lors de l'accouplement de la charrue à l'attelage 3 trois points du véhicule tracteur.

Si on se réfère aux figures 1 et 2, on peut voir le système de blocage 2 est monté sur l'axe de connexion 1b positionné dans les trous 10a oblongs de la série intermédiaire ou médiane, c'est-à-dire la série située entre les deux autres séries situées respectivement au-dessus et au-dessous de la série intermédiaire, compte tenu de l'orientation verticale de la potence 1a.

Dans un mode de réalisation préférentiel de la présente invention, comme on peut le voir sur les figures 1, 1a, 1c, 2, 3, 3a, le système de blocage 2 est configuré pour pouvoir réaliser en outre une autre fonction de blocage et, comme on peut le voir sur les figure 3, 3a, pour pouvoir être monté, de manière amovible, sur l'axe de connexion 1b positionné dans les trous 10a oblongs ou ronds de sorte à réaliser (ou exercer), dans une autre configuration de montage, l'autre fonction de blocage en bloquant (consistant à bloquer) la rotation de l'axe de connexion 1b autour de son axe X, tout en conservant au moins une partie du jeu longitudinal dans le cas où l'axe de connexion 1b est positionné dans les trous 10a oblongs. L'autre fonction de blocage peut également être appelée deuxième fonction de blocage ou fonction de blocage additionnelle.

Ainsi, à l'état monté sur l'axe de connexion 1b traversant les trous 10a oblongs de la ou de l'une des série(s), dans la configuration de blocage principale réalisant la fonction de blocage principale, le système de blocage 2 supprime ou bloque le déplacement transversal de l'axe de connexion 1b dans la direction des trous 10a oblongs. A l'état monté sur l'axe de connexion 1b traversant les trous 10a oblongs ou ronds de l'une des série(s), dans l'autre configuration de blocage réalisant/exerçant l'autre fonction de blocage, le système de blocage 2 ne supprime pas, c'est à dire autorise, le déplacement transversal de l'axe de connexion 1b dans la direction des trous 10a oblongs. Cette autre fonction de blocage permet par contre de bloquer la rotation de l'axe de connexion 1b autour de son axe longitudinal X. Dans la fonction de blocage principale du système de blocage 2, le système de blocage 2 est configurée de préférence pour que la rotation de l'axe de connexion 1b autour de son axe longitudinal X soit autorisée.

Pour apporter une flexibilité dans le choix pour l'utilisateur entre une position d'attelage flottante ou une position d'attelage fixe, le système de blocage 2 est avantageusement amovible. En pratique et en fonction des conditions de travail rencontrées dans le champ, l'utilisateur va choisir une position d'attelage dont le point d'attelage supérieur 30c est fixe pour respecter une profondeur de travail précise ou dont le point d'attelage supérieur 30c est flottant pour une meilleure adaptation aux inégalités du sol.

Dans le mode de réalisation préférentiel, le système de blocage 2 est ainsi configuré pour pouvoir être utilisé selon deux configuration de montage sur l'axe de connexion 1b, c'est-à-dire pour pouvoir être monté sur l'axe de connexion 1b dans la configuration de montage principale pour réaliser la fonction de blocage principale (figures 1, 1a, 1b, 1c, 2) ou pour pouvoir être monté sur l'axe de connexion 1b dans l'autre configuration de montage principale pour réaliser l'autre fonction de blocage (figures 3, 3a).

Le système de blocage 2 permet, lorsqu'il réalise, dans la configuration de montage principale, la fonction de blocage principale bloquant le déplacement transversal de l'axe de connexion 1b dans la direction des trous 10a oblongs (supprimant le jeu longitudinal autorisé par les trous 10a oblongs), de transformer ainsi une position d'attelage flottante en position d'attelage fixe.

Ainsi, tout en ayant choisi la hauteur d'attelage du bras supérieur 3c pour un réglage du point de convergence optimisé par rapport au véhicule tracteur, l'utilisateur peut choisir entre un point d'attelage supérieur 30c fixe ou flottant. Avec un point d'attelage fixe, le travail de l'instrument agricole 4 est plus précis alors qu'un point d'attelage flottant permet à l'instrument agricole 4 de suivre les dénivellations du sol. Le système de blocage 2 permet donc une adaptation aux conditions du sol. L'utilisateur peut optimiser le type de position d'attelage, c'est-à-dire choisir une position d'attelage fixe ou une position d'attelage flottante indépendamment de la position du point de convergence en fonction du report de charge requis.

Si on se réfère à nouveau aux figures 3 et 3a, on peut voir le cas où le système de blocage 2 est monté dans l'autre configuration de montage pour réaliser l'autre fonction de blocage. La figure 3 montre ainsi le système de blocage 2 monté sur l'axe de connexion 1b positionné dans les trous 10a oblongs de l'une des séries de trous 10a oblongs et réalisant le blocage de la rotation de l'axe de connexion 1b autour de son axe longitudinal X. Dans ce cas où l'axe de connexion 1b traverse des trous 10a oblongs et où le système de blocage 2 exerce l'autre fonction de blocage, une partie du jeu longitudinal est conservé. Le système de blocage 2 est monté de manière amovible sur l'axe de connexion 1b positionné dans les trous 10a oblongs de la série intermédiaire, comme sur la figure 1.

Cette autre configuration de montage du système de blocage 2 dans laquelle celui-ci réalise l'autre fonction de blocage, permet d'éviter que, lors du relevage de la charrue 4, le point d'attelage supérieur 30c (bras supérieur 3c) entraine en rotation l'axe de connexion 1b autour de son axe longitudinal X et use exagérément les portées d'axes (extrémités des trous oblongs). Cet arrêt (ou ce blocage) en rotation, qui apporte un avantage à la présente invention, n'est cependant pas indispensable. On peut aussi dimensionner le système pour résister à la rotation répétée de l'axe de connexion 1b, ou l'empêcher par un choix judicieux de matériaux ou d'usinages, changeant les coefficients de frottement.

Dans une forme de réalisation préférentielle du système de blocage 2, celui-ci, comme on peut le voir sur les figures annexées, comprend deux éléments de blocage 2a comprenant chacun un corps 20a apte à être monté, de manière amovible, respectivement sur l'une des extrémités de l'axe de connexion 1b et au moins un organe de blocage 21a principal. L'organe de blocage 21a principal est décalé latéralement par rapport au corps 20a et apte, dans la configuration de montage principale, à être inséré dans le jeu longitudinal respectivement de l'un des trous 10a oblongs traversés par l'axe de connexion 1b pour réaliser la fonction principale en supprimant le jeu longitudinal afin de bloquer le déplacement transversal de l'axe de connexion 1b.

De préférence, chaque élément de blocage 2a est apte et destiné à être enfilé sur l'une ou l'autre des extrémités de l'axe de connexion 1b. Lorsque le système de blocage 2 et notamment les deux éléments de blocage 2a sont montés sur l'axe de connexion 1b pour réaliser soit la fonction de blocage principale (Figure 1b) ou soit l'autre fonction de blocage (Figure 3a), ils restent en place durant toute l'utilisation de la charrue dans le champ. L'insertion ou non de l'organe de blocage principal 21a de chaque système de blocage 2 dans le trou oblong 10a respectif va dépendre de la configuration de montage choisi réalisant l'une ou l'autre des deux fonctions de blocage. Ce choix est fait lors de l'attelage de la charrue, notamment lors de la mise en place du point d'attelage supérieur 30c en accrochant la bielle supérieure 3c sur la potence 1a. En fonction de la parcelle de terre qu'il va devoir travailler avec la charrue, l'utilisateur va autoriser ou non un déplacement transversal du point d'attelage supérieur 30c, c'est-à-dire que la charrue va travailler avec un attelage flottant ou avec un attelage fixe donc sans déplacement.

Si l'on considère qu'un trou 10a oblong s'étend longitudinalement entre deux extrémités du trou 10a oblong, le jeu longitudinal peut être compris comme étant, préférentiellement, l'espace entre l'axe de connexion 1b et l'une des deux extrémités du trou 10a, dans une position de l'axe de connexion 1b venant contre l'autre extrémité. Si on se réfère aux figures 1 et 2, on peut voir que l'axe de connexion 1b est bloqué contre l'extrémité avant des trous 10a oblongs traversés par ce dernier par l'insertion de chaque organe de blocage principal 21a dans l'espace situé entre l'axe de connexion 1b et l'extrémité arrière des trous 10a oblongs.

Le matériau, la forme et les dimensions de chaque organe de blocage 21a sont déterminés de sorte que l'insertion de chaque organe de blocage 21a soit réalisé, plus particulièrement, avec un jeu positif, c'est-à-dire que chaque trou 10a oblong recevant l'organe de blocage 21a est plus grand que ce dernier ou avec serrage, c'est-à-dire que l'insertion se fait avec/après déformation locale de l'organe de blocage 21a. On comprend que dans le cas d'un jeu positif, un ajustement éventuel, non comparable au jeu longitudinal (négligeable par rapport à ce dernier), peut exister entre chaque organe de blocage 21a et le trou 10a oblong dans lequel il est inséré.

Dans le mode de réalisation préférentiel du système de blocage 2 configuré pour pouvoir, selon la configuration de montage, réaliser l'une ou l'autre des deux fonctions de blocage, la présente invention peut prévoir qu'au moins l'un des éléments de blocage 2a comprenne en outre au moins un organe de blocage 22a additionnel décalé latéralement par rapport au corps 20a et apte, dans l'autre configuration de montage, à être inséré dans l'un des trous 10a rond(s) ou oblong(s) de la ou l'une des série(s) de trous 10a adjacente à la série de trous 10a oblongs ou ronds traversé par l'axe de connexion 1b de sorte à réaliser l'autre fonction de blocage en bloquant la rotation de l'axe de connexion 1b autour de son axe X. On comprend que dans ce cas, le montage est prévu sur une potence 1a percée de plusieurs séries de trous 10a disposées les unes au-dessus des autres. En se référant à la figure 3, on peut voir que, lorsque le système de blocage 2 est monté sur l'axe de connexion 1b pour assurer l'autre fonction de blocage, l'organe de blocage 22a additionnel de l'un des éléments de blocage 2a est inséré dans l'un des trous 10a oblongs ou ronds de la série de trous 10a adjacente, située au-dessus de la série de trous 10a oblongs traversés par l'axe de connexion 1b. Dans une variante, l'organe de blocage 22a additionnel est inséré dans l'un des trous 10a oblongs ou ronds de la série adjacente située en dessous de la série de trous 10a traversés par l'axe de connexion 1b.

Le matériau, la forme et les dimensions de chaque organe de blocage 22a additionnel sont déterminés de sorte que l'insertion de chaque organe de blocage 22a additionnel soit réalisé, plus particulièrement, avec un jeu positif, c'est-à-dire que chaque trou 10a oblong ou rond recevant l'organe de blocage 22a additionnel est plus grand que ce dernier ou avec serrage, c'est-à-dire que l'insertion se fait avec/après déformation locale de l'organe de blocage 22a additionnel. On comprend que dans le cas d'un jeu positif, un ajustement éventuel peut exister entre chaque organe de blocage 22a et le trou 10a oblong ou rond dans lequel il est inséré.

De préférence, la présente invention peut prévoir que le ou chaque élément de blocage 2a comprenant l'organe de blocage 22a additionnel soit configuré pour que, lorsque le système de blocage 2 est monté sur l'axe de connexion 1b dans l'autre configuration de montage pour réaliser l'autre fonction de blocage, l'organe de blocage 21a principal ne soit pas inséré dans le jeu longitudinal du trou 10a oblong correspondant traversé par l'axe de connexion 1b (figure 3). Cette caractéristique permet de laisser la possibilité de déplacement transversal de l'axe de connexion 1b tout en bloquant la rotation de ce dernier autour de son axe X.

Dans une forme de réalisation préférentielle du corps 20a de chaque élément de blocage 2a, comme on peut le voir sur les figures annexées, le corps 20a est tubulaire ou creux, de préférence de forme cylindrique, comprenant deux extrémités opposées ouvertes et une cavité interne 200a. La cavité interne 200a relie les extrémités opposées de sorte à permettre à l'axe de connexion 1b de traverser le corps 20a de chaque élément de blocage 2a à l'état monté sur l'axe de connexion 1b. Le corps 20a de chaque élément de blocage 2a forme ainsi un élément de montage femelle et chaque extrémité de l'axe de connexion 1b un élément de montage mâle.

Selon les figures annexées, l'organe de blocage 21a principal s'étend du côté de l'une des extrémités ouvertes du corps 20a. Dans le cas où au moins l'un des éléments de blocage 2a comprend également un organe de blocage 22a additionnel (figures 1, 1a, 1c, 2, 3, 3a), ce dernier s'étend du côté de l'autre extrémité ouverte. Tel que visible notamment sur les figures 1a, 1c et 3a, l'organe de blocage 21a principal s'étend d'un côté, ou à l'une des extrémités, de l'élément de blocage 2a et l'organe de blocage 22a de l'autre côté, ou à l'autre extrémité. Cet élément de blocage 2a est donc utile pour permettre la réalisation des deux fonctions de blocage du système de blocage 2, à savoir la fonction de blocage principale grâce à l'organe de blocage 21a principal et l'autre fonction de blocage grâce à l'organe de blocage 22a additionnel. On remarque également que l'organe de blocage 21a principal est différent dans sa forme et sa position par rapport au corps 20a de l'organe de blocage 22a additionnel.

Comme on peut le voir plus particulièrement sur les figures 1a, 1b, 1c, 3a, de préférence, l'organe de blocage 21a principal comprend une face interne 210a reliée au bord externe de l'extrémité ouverte du corps 20a de sorte à prolonger axialement vers l'extérieur la partie correspondante du bord externe. La face interne 210a s'étend dans le prolongement de la cavité interne 200a du corps 20a. Ainsi, la forme de la face interne 210a est similaire à une partie au moins de la forme de la cavité interne 200a ou de la partie cylindrique de l'axe de connexion 1b. En outre, l'organe de blocage 21a principal s'étend latéralement depuis la face interne 210a. L'organe de blocage 21a principal comprend également une face externe dont la forme est correspondante à celle d'un trou 10a oblong, notamment la partie circulaire du trou 10a oblong. De préférence, le ou chaque organe de blocage 21a principal consiste en un ergot ou similaire.

Plus particulièrement, si on se réfère aux figures 1a, 1b et 1c, on peut voir que le montage de l'élément de blocage 2a sur l'axe de connexion 1b est tel que l'organe de blocage 21a principal est inséré dans le trou 10a oblong correspondant en s'étendant derrière l'axe de connexion 1b. Ainsi l'axe de connexion 1b est bloqué en position contre l'extrémité avant du trou 10a oblong. Selon un mode de réalisation non représenté, l'organe de blocage 21a principal s'étend devant l'axe de connexion 1b et ce dernier est bloqué en position contre l'extrémité arrière du trou 10a oblong.

De préférence, l'organe de blocage 22a additionnel, particulièrement visible sur les figures 1, 1a, 1c, 3a, s'étend parallèlement à l'axe du corps 20a. L'organe de blocage 22a additionnel, qui a donc pour fonction de bloquer la rotation de l'axe de connexion 1b autour de son axe longitudinal X, permet ainsi de préserver les flancs de la potence 1a et/ou l'axe de connexion 1b lors des manoeuvres de relevage de l'instrument. Les manoeuvres de relevage consistent par exemple aux sorties et entrées en terre de la charrue. Pour limiter une telle usure, le bras supérieur 3c dispose à au moins l'une de ses extrémités 30c, 31c d'une rotule ou au moins l'une de ses extrémités 30c, 31c est conformée en forme de rotule. En pratique, la rotule est placée entre les flancs 11a de la potence 1a et plus particulièrement entre deux trous 10a. Ainsi, l'axe de connexion 1b est enfilé à travers la rotule d'attelage supérieur. L'organe de blocage 22a additionnel peut être relié au corps 20a de l'élément de blocage 2a au moyen d'une patte de liaison 220a (figures 1, 1a, 1c, 2, 3, 3a). De préférence, le ou chaque organe de blocage 22a additionnel consiste en une excroissance ou similaire. L'organe de blocage 22a additionnel est décalé par rapport au corps 20a. Dans la réalisation illustrée à la figure 1b, l'élément de blocage 2a est dépourvu d'organe de blocage 22a additionnel.

L'axe de connexion 1b est configuré, de manière connue, de sorte que, lorsqu'il est positionné dans l'une des positions d'attelage, ses extrémités dépassent axialement à l'extérieur de la paire de trous 10a correspondante. Dans ce cas, dans une forme préférentielle, comme on peut le voir sur les toutes les figures annexées, le corps 20a de chaque organe de blocage 2a peut présenter une section ou un diamètre supérieur(e) à la largeur ou au diamètre des trous 10a oblongs ou ronds et être apte à être monté, dans la configuration de montage principale ou, le cas échéant, dans l'autre configuration de montage, sur l'une des extrémités de l'axe de connexion 1b dépassant à l'extérieur de la série de trous 10a correspondante. La partie cylindrique de plus grand diamètre sert à réaliser une butée axiale pour l'axe de connexion 1b, dans l'une ou l'autre position.

De préférence, le système de blocage 2 comprend des moyens d'arrêt 2b amovibles, par exemple des moyens d'arrêt 2b amovibles consistant en au moins une goupille d'arrêt, par exemple une goupille élastique, permettant d'immobiliser le corps 20a d'au moins l'un des éléments de blocage 2a par rapport à l'axe de connexion 1b à l'état monté sur ce dernier. D'une manière préférentielle, l'élément de blocage 2a, plus particulièrement le corps 20a, sont pourvus d'un perçage 201a apte à être traversé par l'un des moyens d'arrêt 2b. La présente invention peut prévoir d'utiliser le ou les mêmes moyens d'arrêt 2b pour bloquer l'axe de connexion 1b en translation axial et pour immobiliser le ou les éléments de blocage 2a par rapport à l'axe de connexion 1b. Dans ce dernier cas préférentiel (voir notamment les figures 1, 2 et 3), le ou chaque moyen d'arrêt 2b traverse alors à la fois le perçage 201a du corps 20a d'un élément de blocage 2a et l'alésage 10b correspondant de l'axe de connexion 1b.

Si on se réfère maintenant à la figure 1c, on peut voir que l'axe de connexion 1b peut présenter, de manière connue, une section ou un diamètre plus grand(e) sur une partie 11b de sa longueur, plus particulièrement sur une partie 11b comportant l'une de ses extrémités. En outre, pour permettre une adaptation à ce type d'axe de connexion 1b présent sur le marché, la présente invention peut prévoir que le corps 20a de l'un des deux éléments de blocage 2a présente une section ou un diamètre supérieur(e) à la plus grande section ou au plus grand diamètre de l'axe de connexion 1b de sorte à pouvoir monter l'élément de blocage 2a sur la partie de plus grande section ou de plus grand diamètre de l'axe de connexion 1b.

La présente invention permet ainsi de choisir le type d'attelage fixe ou flottant pour s'adapter aux conditions de travail tout en ayant une force de traction du véhicule tracteur. Elle permet plus particulièrement d'optimiser le réglage du point de convergence en conservant la même cinématique d'attelage indépendamment du besoin ou du choix du type de position d'attelage fixe ou flottante.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de liaison pour relier un instrument agricole (4), à un attelage (3) trois points d'un véhicule tracteur, l'attelage (3) comportant un bras supérieur (3c), le dispositif de liaison comprenant une tête d'attelage (1) comprenant, d'une part, une potence (1a) percée d'une ou plusieurs série(s) de trous (10a) disposées les unes au-dessus des autres, la ou chaque série de trous (10a) définissant une position d'attelage à une hauteur prédéterminée, la ou au moins l'une des série(s) comportant des trous (10a) oblongs définissant une position d'attelage flottante, le cas échéant l'autre ou au moins l'une des autres série(s) comportant des trous (10a) oblongs ou ronds, la ou chaque série de trous (10a) ronds définissant une position d'attelage fixe et, d'autre part, un axe de connexion (1b) apte à être positionné dans l'une des positions d'attelage, en traversant les trous (10a) oblongs ou ronds définissant cette dernière, pour permettre la connexion du bras supérieur (3c) avec la potence (1a) et réaliser un point d'attelage supérieur (30c), l'axe de connexion (1b) traversant les trous (10a) oblongs avec un jeu longitudinal permettant un déplacement transversal de l'axe de connexion (1b) dans la direction des trous oblongs, **caractérisé en ce qu'**il comprend en outre un système de blocage (2) configuré pour pouvoir réaliser une fonction de blocage principale et pour pouvoir être monté, de manière amovible, sur l'axe de connexion (1b) positionné dans les trous (10a) oblongs de sorte à réaliser, dans une configuration de montage principale, la fonction de blocage principale en bloquant le déplacement transversal de l'axe de connexion (1b) dans la direction des trous (10a) oblongs, de préférence tout en bloquant la rotation de l'axe de connexion (1b) autour de son axe (X).

2. Dispositif de liaison, selon la revendication 1, **caractérisé en ce que** le système de blocage (2) est configuré pour pouvoir réaliser en outre une autre fonction de blocage et pour pouvoir être monté, de manière amovible, sur l'axe de connexion (1b) positionné dans les trous (10a) oblongs ou ronds de sorte à réaliser, dans une autre configuration de montage, l'autre fonction de blocage bloquant la rotation de l'axe de connexion (1b) autour de son axe (X), tout en conservant au moins une partie du jeu longitudinal dans le cas où l'axe de connexion (1b) est positionné dans les trous (10a) oblongs.

3. Dispositif de liaison, selon la revendication 1 ou 2, **caractérisé en ce que** le système de blocage (2) comprend deux éléments de blocage (2a) comprenant chacun un corps (20a) apte à être monté de manière amovible, respectivement sur l'une des extrémités de l'axe de connexion (1b) et au moins un organe de blocage (21a) principal décalé latéralement par rapport au corps (20a) et étant apte, dans la configuration de montage principale, à être inséré dans le jeu longitudinal respectivement de l'un des trous (10a) oblongs traversés par l'axe de connexion (1b) pour réaliser la fonction principale en supprimant le jeu longitudinal afin de bloquer le déplacement transversal de l'axe de connexion (1b).

4. Dispositif de liaison, selon les revendications 2 et 3, **caractérisé en ce qu'**au moins l'un des éléments de blocage (2a) comprend en outre au moins un organe de blocage (22a) additionnel décalé latéralement par rapport au corps (20a) et apte, dans l'autre configuration de montage, à être inséré dans l'un des trous (10a) rond(s) ou oblong(s) de la ou l'une des série(s) de trous (10a) adjacente à la série de trous (10a) oblongs ou ronds traversé par l'axe de connexion (1b) de sorte à réaliser l'autre fonction de blocage bloquant la rotation de l'axe de connexion (1b) autour de son axe (X).

5. Dispositif de liaison, selon la revendication 4, **caractérisé en ce que** le ou chaque élément de blocage (2a) comprenant l'organe de blocage (22a) additionnel est configuré pour que, lorsque le système de blocage (2) est monté sur l'axe de connexion (1b) dans l'autre configuration de montage, l'organe de blocage (21a) principal ne soit pas inséré dans le jeu longitudinal du trou (10a) oblong correspondant traversé par l'axe de connexion (1b).

6. Dispositif de liaison, selon l'une quelconque des revendications 3 à 5, **caractérisé en ce que** le corps (20a) de chaque élément de blocage (2a) est un corps tubulaire, de préférence de forme cylindrique, comprenant deux extrémités opposées ouvertes et une cavité interne (200a) reliant ces dernières de sorte à permettre à l'axe de connexion (1b) de traverser le corps (20a) de chaque élément de blocage (2a) à l'état monté sur l'axe de connexion (1b).

7. Dispositif de liaison, selon la revendication 6, **caractérisé en ce que** l'organe de blocage (21a) principal s'étend du côté de l'une des extrémités ouvertes et que l'organe de blocage (22a) additionnel s'étend du côté de l'autre extrémité ouverte.

8. Dispositif de liaison, selon l'une quelconque des revendications 4 à 5 ou selon l'une quelconque des revendications 6 à 7 prises chacune en combinaison avec l'une quelconque des revendications 4 à 5, **caractérisé en ce que** l'organe de blocage (22a) additionnel s'étend parallèlement à l'axe du corps (20a).

9. Dispositif de liaison, selon l'une quelconque des revendications 6 à 8, **caractérisé en ce que** l'organe de blocage (21a) principal de chaque élément de blocage (2a) s'étend du côté de l'une des extrémités ouvertes et comprend une face interne (210a) reliée au bord externe de l'extrémité ouverte de sorte à prolonger axialement vers l'extérieur la partie correspondante du bord externe et **en ce que** l'organe de blocage (21a) principal s'étend latéralement depuis la face interne (210a).

10. Dispositif de liaison, selon l'une quelconque des revendications 3 à 9, **caractérisé en ce que** le corps (20a) de chaque organe de blocage (2a) présente une section ou un diamètre supérieur(e) à la largeur ou au diamètre des trous (10a) oblongs ou ronds et est apte à être monté, dans la configuration de montage principale ou, le cas échéant, dans l'autre configuration de montage, sur l'une des extrémités de l'axe de connexion (1b) dépassant à l'extérieur de la série de trous (10a) correspondante.

11. Dispositif de liaison, selon l'une quelconque des revendications 3 à 10, **caractérisé en ce que** le système de blocage (2) comprend des moyens d'arrêt (2b) amovibles, par exemple au moins une goupille élastique, permettant d'immobiliser le corps (20a) d'au moins l'un des éléments de blocage (2a) par rapport à l'axe de connexion (1b) à l'état monté sur ce dernier.

12. Dispositif de liaison, selon l'une quelconque des revendications 1 à 11, **caractérisé en ce que** l'axe de connexion (1b) présente une section ou un diamètre plus grand(e) sur une partie (11b) de sa longueur, plus particulièrement sur une partie (11b) comportant l'une de ses extrémités, et **en ce que** le corps (20a) de l'un des deux éléments de blocage (2a) présente une section ou un diamètre supérieur(e) à la plus grande section ou au plus grand diamètre de l'axe de connexion (1b) de sorte à pouvoir monter l'élément de blocage (2a) sur la partie de plus grande section ou de plus grand diamètre de l'axe de connexion (1b).

13. Dispositif de liaison, selon l'une quelconque des revendications 1 à 12, **caractérisé en ce que** le système de blocage 2 est installé sur l'axe de connexion 1b lors de l'accouplement de l'instrument agricole (4).
